# EUROPEAN PATENT APPLICATION

(11) **EP 4 583 594 A1**
(43) Date of publication of application: **09.07.2025**
(21) Application number: 22956873.8
(22) Date of filing: 31.08.2022
(51) Int. Cl.: H04W 56/00, H04W 64/00, H04W 74/00

(54) **TIMING ADVANCE (TA) MEASUREMENT METHOD AND APPARATUS**

(71) Applicant: Beijing Xiaomi Mobile Software Co., Ltd., Beijing 100085 (CN)
(72) Inventor: LUO, Xingyi, Beijing 100085 (CN)
(74) Representative: Dehns Germany Partnerschaft mbB
(86) International application number: PCT/CN2022/116217
(87) International publication number: WO 2024/045044

(57) **Abstract**

A timing advance (TA) measurement method and apparatus, which relate to the technical field of communications. The method comprises: on the basis of target information sent by a terminal device (102), a network device (101) measuring a TA from the terminal device (102) to a candidate cell; and the network device (101) indicating or updating, for the terminal device, the TA of the candidate cell. In the method, the value of a TA from a user to each candidate cell can be measured in advance, and the value of the TA of each candidate cell is indicated or updated for the user, such that when inter-cell switching is carried out, a target cell can be accessed more quickly, thereby reducing the switching time overheads.

## Description

### TECHNICAL FIELD

The present disclosure relates to a field of communication technology, and specifically to a method and an apparatus for measuring a timing advance (TA).

### BACKGROUND

A base station can maintain a plurality of candidate cells for a user. One cell can be selected from the plurality of candidate cells and determined as a target cell when it is required to perform cell handover. However, timing advances (TAs) of respective serving cells and respective candidate cells with respect to the user may be different. In this way, it is required to perform a random access to synchronize to the target cell when the user hands over to cells with different TAs. As a result, time overhead of accessing the target cell will increase accordingly.

### SUMMARY

Embodiments of the present disclosure provide a method and an apparatus for measuring a timing advance (TA). TA values of respective candidate cells with respect to a user may be pre-measured, and the TA values of the respective candidate cells may be indicated or updated for the user, such that during inter-cell handover, fast accessing a target cell may be achieved and time overhead of the handover may be reduced.

According to a first aspect, an embodiment of the present disclosure provides a method for measuring a TA. The method is performed by a network device, and includes: measuring a TA of a candidate cell with respect to a terminal based on target information sent by the terminal; and indicating or updating the TA of the candidate cell to the terminal.

In an embodiment of the present disclosure, the TA of the candidate cell with respect to the terminal is measured based on the target information sent by the terminal, and the TA of the candidate cell is indicated or updated to the terminal. In this way, TA values of respective candidate cells with respect to the user may be pre-measured, and the TA values of the respective candidate cells may be indicated or updated for the user, such that during inter-cell handover, fast accessing the target cell may be achieved, and time overhead of the handover may be reduced.

According to a second aspect, an embodiment of the present disclosure provides a method for measuring a TA. The method is performed by a terminal, and includes: sending target information corresponding to a candidate cell to a network device, in which the target information is configured to measure a TA of the candidate cell with respect to the terminal; and receiving information indicating or updating the TA of the candidate cell sent by the network device.

In an embodiment of the present disclosure, the target information corresponding to the candidate cell is sent to the network device, in which the target information is configured to measure the TA of the candidate cell with respect to the terminal, and the information indicating or updating the TA of the candidate cell sent by the network device is received. In this way, TA values of respective candidate cells with respect to the user may be pre-measured, and the TA values of the respective candidate cells may be indicated or updated for the user, such that during inter-cell handover, fast accessing the target cell may be achieved and time overhead of the handover may be reduced.

According to a third aspect, an embodiment of the present disclosure provides a communication apparatus. The communication apparatus has some or all of functions of the terminal in the method as described in above first aspect, such as functions of the communication apparatus may have some or all of functions in embodiments of the present disclosure, or may have functions of implementing any one of embodiments of the present disclosure independently. The functions may be realized by hardware, or by executing corresponding software by hardware. The hardware or software includes one or more units or modules corresponding to the above functions.

In an implementation, a structure of the communication apparatus may include a transceiver module and a processing module, in which the processing module is configured to support the communication apparatus to perform corresponding functions in above method, and the transceiver module is configured to support communication between the communication apparatus and other devices. The communication apparatus may also include a storage module for coupling with the transceiver module and the processing module, in which the storage module stores a computer program and data necessary for the communication apparatus.

As an example, the processing module may be a processor, the transceiver module may be a transceiver or a communication interface, and the storage module may be a memory.

According to a fourth aspect, an embodiment of the present disclosure provided a communication apparatus. The communication apparatus has some or all of functions of the network device in the method as described in above second aspect, such as functions of the communication apparatus may have some or all of functions in embodiments of the present disclosure, or may have functions of implementing any one of embodiments of the present disclosure independently. The functions may be realized by hardware, or by executing corresponding software by hardware. The hardware or software includes one or more units or modules corresponding to the above functions.

In an implementation, a structure of the communication apparatus may include a transceiver module and a processing module, in which the processing module is configured to support the communication apparatus to perform corresponding functions in above method, and the transceiver module is configured to support communication between the communication apparatus and other devices. The communication apparatus may also include a storage module for coupling with the transceiver module and the processing module, in which the storage module stores a computer program and data necessary for the communication apparatus.

According to a fifth aspect, an embodiment of the present disclosure provides a communication device. The communication device includes a processor. When a computer program in a memory is called by the processor, the method as described in the above first aspect is implemented.

According to a sixth aspect, an embodiment of the present disclosure provides a communication device. The communication device includes a processor. When a computer program in a memory is called by the processor, the method as described in the above second aspect is implemented.

According to a seventh aspect, an embodiment of the present disclosure provides a communication device. The communication device includes a processor and a memory for storing a computer program. When the computer program stored in the memory is executed by the processor, the communication device is caused to implement the method in the above first aspect.

According to an eighth aspect, an embodiment of the present disclosure provides a communication device. The communication device includes a processor and a memory for storing a computer program. When the computer program stored in the memory is executed by the processor, the communication device is caused to implement the method in the above second aspect.

According to a ninth aspect, an embodiment of the present disclosure provides a communication device. The communication device includes a processor and an interface circuit, in which the interface circuit is configured to receive code instructions and transmit the code instructions to the processor; and the processor is configured to run the code instructions to cause the communication device to implement the method in the above first aspect.

According to a tenth aspect, an embodiment of the present disclosure provides a communication device. The communication device includes a processor and an interface circuit, in which the interface circuit is configured to receive code instructions and transmit the code instructions to the processor; and the processor is configured to run the code instructions to cause the communication device to implement the method in the above second aspect.

According to an eleventh aspect, an embodiment of the present disclosure provides a system for measuring a TA. The system includes the communication apparatus in the third aspect and the communication apparatus in the fourth aspect, or the communication device in the fifth aspect and the communication device in the sixth aspect, or the communication device in the seventh aspect and the communication device in the eighth aspect, or the communication device in the ninth aspect and the communication device in the tenth aspect.

According to a twelfth aspect, an embodiment of the present disclosure provides a computer readable storage medium. The storage medium stores instructions used by the above terminal. When the instructions are executed, the terminal is caused to implement the method in the above first aspect.

According to a thirteenth aspect, an embodiment of the present disclosure provides a readable storage medium. The storage medium stores instructions used by the above network device. When the instructions are executed, the network device is caused to implement the method in the above second aspect.

According to a fourteenth aspect, an embodiment of the present disclosure provides a computer program product including a computer program. When the computer program is running on a computer, the computer is caused to implement the method in the above first aspect.

According to a fifteenth aspect, an embodiment of the present disclosure provides a computer program product including a computer program. When the computer program is running on a computer, the computer is caused to implement the method in the above second aspect.

According to a sixteenth aspect, an embodiment of the present disclosure provides a chip system. The chip system includes at least one processor and at least one interface, configured to support the terminal to perform functions as described in the first aspect, for example, to determine or process at least one of data and information in above methods. In a possible design, the chip system also includes a memory for saving a computer program and data necessary for the terminal. The chip system may include a chip, or a chip and other discrete devices.

According to a seventeenth aspect, an embodiment of the present disclosure provides a chip system. The chip system includes at least one processor and at least one interface, configured to support the network device to perform functions as described in the second aspect, for example, to determine or process at least one of data and information in above methods. In a possible design, the chip system also includes a memory for saving a computer program and data necessary for the network device. The chip system may include a chip, or a chip and other discrete devices.

According to an eighteenth aspect, an embodiment of the present disclosure provides a computer program. When the computer program is running on a computer, the computer is caused to implement the method in the above first aspect.

According to a nineteenth aspect, an embodiment of the present disclosure provides a computer program. When the computer program is running on a computer, the computer is caused to implement the method in the above second aspect.

### BRIEF DESCRIPTION OF THE DRAWINGS

In order to more clearly illustrate the technical solution in embodiments of the disclosure or the background, the accompanying drawings to be used in embodiments of the disclosure or the background will be described below.
FIG. 1 is a schematic diagram of an architecture of a communication system according to an embodiment of the present disclosure.
FIG. 2 is a flowchart of a method for measuring a timing advance (TA) according to an embodiment of the present disclosure.
FIG. 3 is a schematic diagram of performing measurement on a TA according to an embodiment of the present disclosure.
FIG. 4 is a flowchart of a method for measuring a TA according to an embodiment of the present disclosure.
FIG. 5 is a flowchart of a method for measuring a TA according to an embodiment of the present disclosure.
FIG. 6 is a schematic diagram of performing measurement on a TA according to an embodiment of the present disclosure.
FIG. 7 is a flowchart of a method for measuring a TA according to an embodiment of the present disclosure.
FIG. 8 is a flowchart of a method for measuring a TA according to an embodiment of the present disclosure.
FIG. 9 is a flowchart of a method for measuring a TA according to an embodiment of the present disclosure.
FIG. 10 is a block diagram of a communication apparatus according to an embodiment of the present disclosure.
FIG. 11 is a block diagram of a communication device according to an embodiment of the present disclosure.
FIG. 12 is a block diagram of a chip according to an embodiment of the present disclosure.

### DETAILED DESCRIPTION

Reference will now be made in detail to example embodiments, examples of which are illustrated in the accompanying drawings. The following description refers to the accompanying drawings in which the same numbers in different drawings represent the same or similar elements unless otherwise represented. The implementations set forth in the following description of example embodiments do not represent all implementations consistent with the present disclosure. Instead, they are merely examples of apparatuses and methods consistent with aspects related to the present disclosure as recited in the appended claims.

The terms used in embodiments of the present disclosure are solely for the purpose of describing a particular embodiment and are not intended to limit embodiments of the present disclosure. The terms "a/an" and "the" in a singular form used in embodiments and claims of the present disclosure are also intended to include a plural form, unless the context clearly indicates other meaning. It may also be understood that the term "and/or" as used herein refers to any or all possible combinations of one or more associated listed items.

It may be understood that although the terms first, second, third, etc. may be used to describe various information in embodiments of the present disclosure, such information should not be limited to these terms. These terms are used only to distinguish information in the same type from one another. For example, without departing from the scope of embodiments of the present disclosure, first information may also be referred to as second information, and similarly, the second information may be referred to as the first information. Depending on the context, the word "if" used here may be interpreted as "when", "upon", or "in response to determining". For a purpose of brevity and ease of understanding, terms "greater than" or "less than", and "higher than" or "lower than" are used in the present disclosure to represent a size relationship. However, for those skilled in the art, it may be understood that the term "greater than" also covers a meaning of "greater than or equal to" and the term "less than" also covers a meaning of "less than or equal to"; and the term "higher than" covers a meaning of "higher than or equal to", and the term "lower than" also covers a meaning of "lower than or equal to".

For convenience of understanding, terms in the present disclosure will be first introduced.

Timing advance (TA) is used for uplink transmission of a terminal, which means that a system frame for the terminal to send uplink data is scheduled ahead of a corresponding downlink frame by a certain amount of time.

In order to better understand a method for measuring a TA in embodiments of the present disclosure, a communication system applicable to embodiments of the present disclosure is first described below.

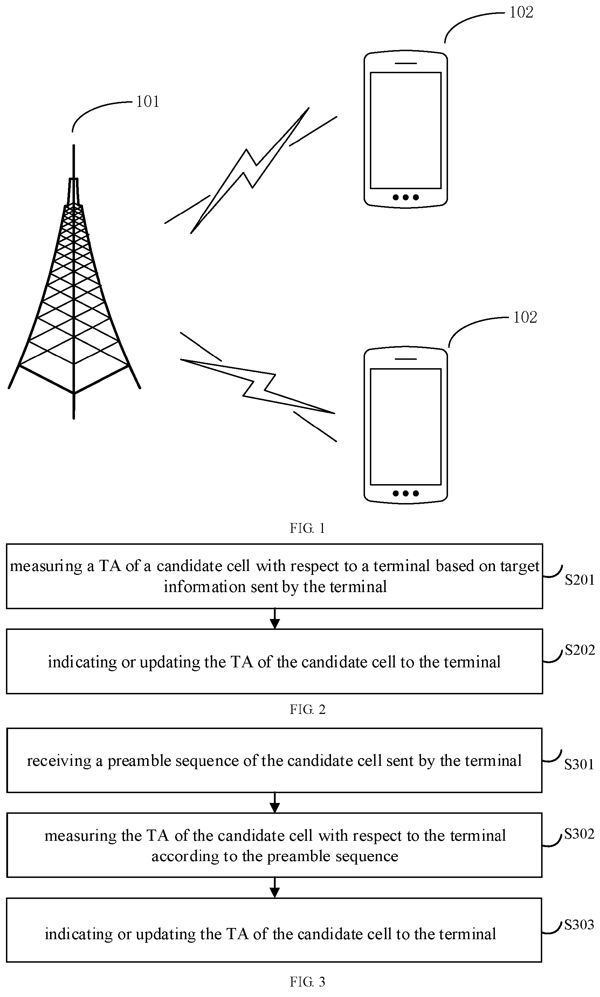

Please refer to FIG. 1, FIG. 1 is a schematic diagram of an architecture of a communication system according to an embodiment of the present disclosure. The communication system may include, but is not limited to, one network device and one terminal device. The number and form of devices in the FIG. 1 are only shown as an example, and do not constitute a limitation on embodiments of the present disclosure. The communication system may include two or more network devices and two or more terminal devices in a practical application. The communication system in the FIG. 1 including one network device 101 and one terminal device 102 is shown as an example.

It needs to be noted that the technical solution of embodiments of the present disclosure may be applied to various communication systems, for example, a long term evolution (LTE) system, a 5th generation (5G) mobile communication system, a 5G new radio (NR) system, or other new mobile communication systems in the future. It also needs to be noted that a sidelink in embodiments of the present disclosure may also be called as a side link or a direct link.

The network device 101 in embodiments of the present disclosure is an entity on the network side for sending or receiving signals. For example, the network device 101 may be an evolved NodeB (eNB), a transmission reception point (TRP), a next generation NodeB (gNB) in an NR system, a base station in other mobile communication system in the future, or an access node in a wireless fidelity (WiFi) system. The embodiments of the present disclosure do not limit a specific technology and a specific device form used by the network device. The network device according to embodiments of the disclosure may be composed of a central unit (CU) and distributed units (DUs). The CU may also be referred to as a control unit. The use of CU-DU structure allows to divide a protocol layer of the network device, such as a base station, such that some of the protocol layer functions are placed in the CU for centralized control, and some or all of the remaining protocol layer functions are distributed in the DUs, and the DUs are centrally controlled by the CU.

The terminal device 102 in embodiments of the present disclosure is an entity on the user side for receiving or sending signals, such as a mobile phone. The terminal device may also be called a terminal, a user equipment (UE), a mobile station (MS), a mobile terminal (MT), etc. The terminal device may be a car with communication function, a smart car, a mobile phone, a wearable device, a Pad, a computer with a wireless receiving and sending function, a virtual reality (VR) terminal, an augmented reality (AR) terminal, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, etc. The embodiments of the present disclosure do not limit a specific technology and a specific device form used by the terminal device.

In sidelink communication, there are four sidelink transmission modes. Sidelink transmission mode 1 and sidelink transmission mode 2 are used for device-to-device (D2D) communication of the terminal. Sidelink transmission mode 3 and sidelink transmission mode 4 are used for vehicle to everything (V2X) communication. When the sidelink transmission mode 3 is adopted, resource allocation is scheduled by the network device 101. Specifically, the network device 101 may send resource allocation information to the terminal device 102, and then the terminal device 102 allocates a resource to another terminal device, such that another terminal device may send information to the network device 101 via an allocated resource. In the V2X communication, a terminal with a better signal or higher reliability may be used as the terminal device 102. A first terminal mentioned in embodiments of the present disclosure may refer to as the terminal 102 and a second terminal may refer to as another terminal.

It may be understood that the communication system in embodiments of the present disclosure is to more clearly illustrate the technical solution of embodiments of the present disclosure, and does not constitute a limitation on the technical solution in embodiments of the present disclosure. Those skilled in the art may know, with evolution of the system architecture and emergence of new service scenarios, the technical solution in embodiments of the present disclosure is also applicable to similar technical problems.

It needs to be noted that a method for measuring a TA in any one of embodiments of the present disclosure may be performed independently, or in combination with possible implementation in other embodiments, or in combination with any one of technical solutions in related arts.

A method and an apparatus for measuring a TA in embodiments of the present disclosure are described in detail in combination with the accompanying drawings.

Please refer to FIG. 2, FIG. 2 is a flowchart of a method for measuring a TA according to an embodiment of the present disclosure. The method for measuring a TA is performed by a network device. The method for measuring a TA includes but is not limited to the following steps.

At step S201, a TA of a candidate cell with respect to a terminal is measured based on target information sent by the terminal.

Optionally, the network device may be a network device of a source cell.

It needs to be noted that a base station can maintain a plurality of candidate cells for a user. One cell can be selected from the plurality of candidate cells and determined as a target cell when it is required to perform cell handover. However, TAs of respective serving cells and respective candidate cells with respect to the user may be different. In this way, it is required to perform a random access to synchronize to the target cell when the user hands over to cells with different TAs. As a result, time overhead of accessing the target cell will increase accordingly. Therefore, TA values of the respective candidate cells with respect to the user may be obtained in advance, and accessing the target cell may be performed as soon as possible during handover.

It needs to be noted that during performing cell handover, the candidate cell may be a cell to which the terminal may hand over later, specifically, a neighbor cell of a serving cell where the terminal is currently located, and the source cell may be a cell to which the terminal is currently accessing.

Optionally, a preamble sequence sent by the terminal may be received and the TA of the candidate cell with respect to the terminal may be measured according to the preamble sequence.

Optionally, when receiving the preamble sequence of the candidate cell sent by the terminal, the preamble sequence periodically sent by the terminal may be received; and the terminal may be triggered for a random access and the preamble sequence of the candidate cell sent by the terminal in a triggered random access process is received.

Optionally, the network device may receive a sounding reference signal (SRS) of the candidate cell sent by the terminal; and measure the TA of the candidate cell with respect to the terminal according to the SRS.

In embodiments of the present disclosure, the network device may receive SRS information configured by the source cell for the terminal, determine a receiving time frequency position of the SRS according to the SRS information, receive the SRS sent by the terminal at the receiving time frequency position, and then may measure the TA of the candidate cell with respect to the terminal according to the SRS.

At step S202, the TA of the candidate cell is indicated or updated to the terminal.

It needs to be noted that the terminal may be configured with a plurality of candidate cells. After obtaining TAs of respective candidate cells with respect to the terminal, optionally, the network device may indicate or update the TAs of the respective candidate cells with respect to the terminal separately. Optionally, the network device may indicate or update TAs of all candidate cells to the terminal together.

In embodiments of the present disclosure, a network device corresponding to the source cell may directly indicate or update the TA of the candidate cell to the terminal. In some implementations, the network device may indicate or update the TA of the candidate cell to the terminal via a random access response (RAR).

In embodiments of the present disclosure, in present of indicating or updating for first time, the network device may indicate or update the TA of the candidate cell to the terminal, that is, indicate or update an absolute value of the TA of the candidate cell to the terminal; and in present of indicating or updating the TA of the candidate cell for non-first time, the network device may indicate or update an adjustment amount of the TA of the candidate cell to the terminal.

Optionally, in present of indicating or updating the TA of the candidate cell for first time, the TA of the candidate cell is indicated or updated to the terminal via the RAR.

For example, in present of indicating or updating the TA of the candidate cell for first time, the network device may update the TA via a medium access control control element (MAC CE), in which the MAC CE at least includes a candidate cell identifier with an indication field of 12 bits to indicate the TA value so as to indicate or update the TA of the candidate cell to the terminal via the RAR.

For example, in present of indicating or updating the TA of the candidate cell for non-first time, the network device may configure the adjustment amount of the TA of the candidate cell to the terminal via radio resource control (RRC) configuration information.

In embodiments of the present disclosure, the TA of the candidate cell with respect to the terminal is measured based on the target information sent by the terminal, and the TA of the candidate cell is indicated or updated to the terminal. In the present disclosure, before performing inter-cell handover, TA values of respective candidate cells with respect to the user may be measured in advance, and the TA values of the respective candidate cells may be indicated or updated for the user, such that during inter-cell handover, fast accessing the target cell may be achieved and time overhead of handover may be reduced.

Please refer to FIG. 3, FIG. 3 is a flowchart of a method for measuring a TA according to an embodiment of the present disclosure. The method for measuring a TA is performed by a network device. The method for measuring a TA includes but is not limited to the following steps.

At step S301, a preamble sequence of the candidate cell sent by the terminal is received.

Optionally, the network device may be a network device of a source cell.

In embodiments of the present disclosure, optionally, the preamble sequence sent by the terminal on a random access channel (RACH) occasion (RO) resource is received; and optionally, the preamble sequence sent by the terminal on an optimum beam of the candidate cell via the RO resource is received.

It needs to be noted that the present disclosure does not limit a method for determining the optimum beam.

Optionally, one RO resource preconfigured by the candidate cell for the terminal may be determined, in which a plurality of beams of the candidate cell all correspond to the RO resource; and the preamble sequence sent by the terminal on the optimum beam via the RO resource is received. A beam measurement result may be configured to determine the optimum beam of the candidate cell. Further, first radio resource control (RRC) configuration information is sent to the terminal, in which the first RRC configuration information indicates the terminal to obtain the beam measurement result of the candidate cell. The terminal may also report the measurement result to the candidate cell, and the candidate cell may accordingly determine the optimum beam selected by the terminal to send the preamble sequence based on the beam measurement result.

Optionally, a serving cell may configure a plurality of RO resources preconfigured by the candidate cell for the terminal, in which the plurality of RO resources correspond to a plurality of beams of the candidate cell respectively, and receive the preamble sequence sent by the terminal on a target beam corresponding to a target RO resource via the target RO resource, in which the target RO resource is one RO resource selected by the terminal from the plurality of RO resources preconfigured, and the target beam corresponding to the target RO resource is the optimum beam.

Further, second RRC configuration information is sent to the terminal, in which the second RRC configuration information indicates at least one of the plurality of RO resources and/or a plurality of preamble sequences preconfigured by the candidate cell for the terminal, in which the plurality of preamble sequences correspond to the plurality of RO resources respectively, that is, different RO resources may use different preamble sequences.

It needs to be noted that the terminal may send the preamble sequences of the candidate cells to all candidate cells, and the terminal may also send the preamble sequence of the candidate cell to the candidate cell when the beam measurement result of the candidate cell meet a certain condition.

For example, in response to a beam measurement result of the optimum beam of the candidate cell>a beam measurement result of the optimum beam of the source cell+ an offset, the terminal sends the preamble sequence of the candidate cell to the candidate cell; in response to an average value of beam measurement results of the candidate cell> an average value of beam measurement results of the source cell+ an offset, the terminal sends the preamble sequence of the candidate cell to the candidate cell; in response to the average value or a maximum value of the beam measurement results of the candidate cell>a beam measurement threshold of the candidate cell, the terminal sends the preamble sequence of the candidate cell to the candidate cell; or in response to top N optimum measurement results are the measurement results of the candidate cell, the terminal sends the preamble sequence of the candidate cell to the candidate cell.

Optionally, the terminal may be triggered to perform a random access, and receive the preamble sequence sent by the terminal in a triggered random access process.

Optionally, the terminal is periodically triggered for the random access by multiplexing a physical downlink control channel (PDCCH) order to send the preamble sequence of the candidate cell; and optionally, after triggering the terminal for the random access for first time by multiplexing the PDCCH order to send the preamble sequence of the candidate cell, the preamble sequence of the candidate cell periodically sent by the terminal is received, in which the PDCCH order is configured to trigger the terminal for the random access.

It needs to be noted that state information of the terminal may be monitored, and whether to remeasure the TA is determined according to the state information of the terminal; and in present of determining to remeasure the TA, the terminal is triggered for performing the random access to send the preamble sequence. The state information may include location information and speed information of the terminal.

Optionally, after triggering the terminal for the random access for first time by multiplexing the PDCCH order to send the preamble sequence, the state information of the terminal is monitored, and whether to remeasure the TA is determined according to the state information of the terminal; and in present of determining to remeasure the TA, the terminal is triggered for the random access again by multiplexing the PDCCH order to send the preamble sequence.

Further, after triggering the terminal for the random access to send the preamble sequence, the preamble sequence may be sent periodically, and the TA of the candidate cell is measured, that is, the TA of the candidate cell is measured semi-statically.

Further, a cell identifier of a candidate cell to be performed the random access to the terminal is indicated via the PDCCH order; and/or at least one of an RO, a preamble sequence and transmitting beam information corresponding to the candidate cell to be performed the random access to the terminal is indicated via the PDCCH order.

Further, when receiving the preamble sequence sent by the terminal on the RO resource, second RRC configuration information is sent to the terminal, in which the second RRC configuration information indicates a candidate RO resource and/or a candidate preamble sequence corresponding to the candidate cell preconfigured for the terminal.

At step S302, the TA of the candidate cell with respect to the terminal is measured according to the preamble sequence.

At step S303, the TA of the candidate cell is indicated or updated to the terminal.

It needs to be noted that the terminal may be configured with a plurality of candidate cells. After obtaining TAs of respective candidate cells with respect to the terminal, optionally, the network device may indicate or update the TAs of the respective candidate cells with respect to the terminal separately. Optionally, the network device may indicate or update TAs of all candidate cells to the terminal together.

In embodiments of the present disclosure, a network device corresponding to the source cell may directly indicate or update the TA of the candidate cell to the terminal. In some implementation, the network device may indicate or update the TA of the candidate cell to the terminal via an RAR.

In embodiments of the present disclosure, in present of indicating or updating for first time, the network device may indicate or update the TA of the candidate cell to the terminal, that is, indicate or update an absolute value of the TA of the candidate cell to the terminal; and in present of indicating or updating the TA of the candidate cell for non-first time, the network device may indicate or update an adjustment amount of the TA of the candidate cell to the terminal.

Optionally, in present of indicating or updating the TA of the candidate cell for first time, the TA of the candidate cell is indicated or updated to the terminal via the RAR.

For example, in present of indicating or updating the TA of the candidate cell for first time, the network device may update the TA via a MAC CE, in which the MAC CE at least includes a candidate cell identifier with an indication field of 12 bits to indicate the TA value so as to indicate or update the TA of the candidate cell to the terminal via the RAR.

For example, in present of indicating or updating the TA of the candidate cell for non-first time, the network device may configure the adjustment amount of the TA of the candidate cell to the terminal via RRC configuration information.

In embodiments of the present disclosure, the preamble sequence of the candidate cell sent by the terminal is received, and the TA of the candidate cell with respect to the terminal is measured according to the preamble sequence, and the TA of the candidate cell is indicated or updated to the terminal. In the present disclosure, before performing inter-cell handover, TA values of respective candidate cells with respect to the user may be measured in advance, and the TA values of the respective candidate cells may be indicated or updated for the user, such that during inter-cell handover, fast accessing the target cell may be achieved and time overhead of handover may be reduced.

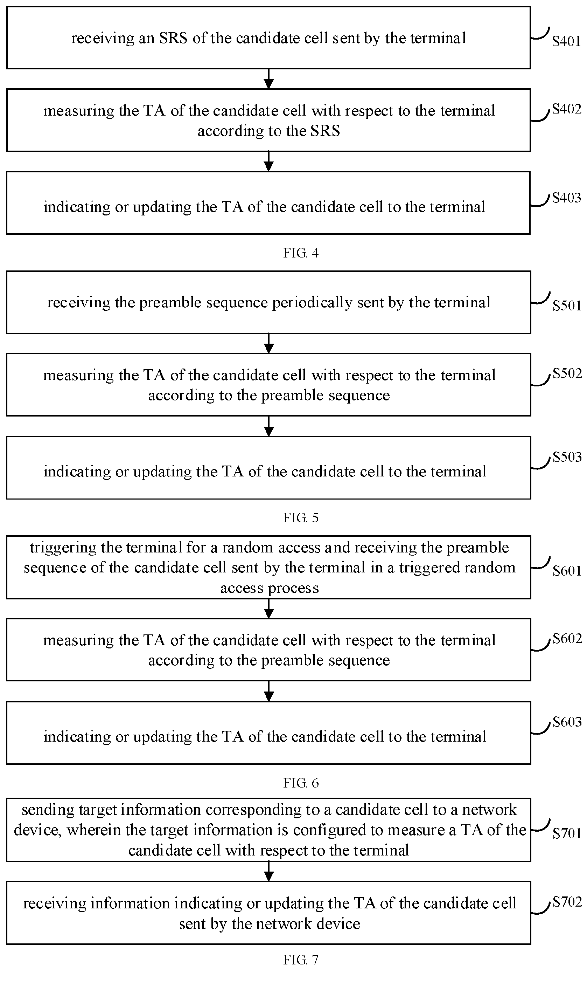

Please refer to FIG. 4, FIG. 4 is a flowchart of a method for measuring a TA according to an embodiment of the present disclosure. The method for measuring a TA is performed by a network device. The method for measuring a TA includes but is not limited to the following steps.

At step S401, an SRS of the candidate cell sent by the terminal is received.

Optionally, the network device may be a network device of a source cell.

Optionally, the network device may receive SRS information configured by the source cell for the terminal, determine a receiving time frequency position of the SRS according to the SRS information, and receive the SRS sent by the terminal at the receiving time frequency position.

Optionally, the network device may obtain a sending period of the SRS of the candidate cell from the SRS information, and the network device may receive the SRS of the candidate cell based on the sending period of the SRS after determining the sending period of the SRS.

At step S402, the TA of the candidate cell with respect to the terminal is measured according to the SRS.

It needs to be noted that an SRS corresponding to the candidate cell may be received at the receiving time frequency position of the SRS according to the SRS information of the candidate cell, so that the TA of the candidate cell with respect to the terminal is measured according to the SRS so as to obtain the TA of the candidate cell.

In embodiments of the present disclosure, a measurement period of the TA may also be obtained from the SRS information. Optionally, the measurement period of the TA may be implicitly determined based on the sending period of the SRS in the SRS information. Optionally, the measurement period of the TA may be set to N times of the sending period of the SRS.

Optionally, the measurement period of the TA may be configured implicitly or explicitly by the network device.

At step S403, the TA of the candidate cell is indicated or updated to the terminal.

For a specific introduction of the step S403, reference can be made to relevant content in embodiments of the present disclosure, which will not be repeated here.

In embodiments of the present disclosure, the SRS of the candidate cell sent by the terminal is received, the TA of the candidate cell is measured according to the SRS, and the TA of the candidate cell is indicated or updated to the terminal. In the present disclosure, before performing inter-cell handover, TA values of respective candidate cells with respect to the user may be measured in advance, and the TA values of the respective candidate cells may be indicated or updated for the user, such that during inter-cell handover, fast accessing the target cell may be achieved and time overhead of handover may be reduced.

Please refer to FIG. 5, FIG. 5 is a flowchart of a method for measuring a TA according to an embodiment of the present disclosure. The method for measuring a TA is performed by a network device. The method for measuring a TA includes but is not limited to the following steps.

At step S501, the preamble sequence periodically sent by the terminal is received.

Optionally, the network device may be a network device of a source cell.

In an embodiment of the present disclosure, a sending period for sending the preamble sequence may be configured for the terminal.

Optionally, the sending period may be configured by a base station. Optionally, the sending period may be a period of an RO resource.

In embodiments of the present disclosure, optionally, the preamble sequence sent by the terminal on the RO resource may be received; and optionally, the preamble sequence sent by the terminal on an optimum beam of the candidate cell via the RO resource may be received.

Optionally, one RO resource preconfigured by the candidate cell for the terminal may be determined, in which a plurality of beams of the candidate cell all correspond to the RO resource; and the preamble sequence sent by the terminal on the optimum beam via the RO resource is received. A beam measurement result may be configured to determine the optimum beam of the candidate cell. Further, first RRC configuration information is sent to the terminal, in which the first RRC configuration information indicates the terminal to obtain the beam measurement result of the candidate cell. The terminal may also report the measurement result to the candidate cell, and the candidate cell may accordingly determine the optimum beam selected by the terminal to send the preamble sequence based on the beam measurement result.

Optionally, a serving cell may configure a plurality of RO resources preconfigured by the candidate cell for the terminal, in which the plurality of RO resources correspond to a plurality of beams of the candidate cell respectively; and receive the preamble sequence sent by the terminal on a target beam corresponding to a target RO resource via the target RO resource, in which the target RO resource is one RO resource selected by the terminal from the plurality of RO resources preconfigured, and the target beam corresponding to the target RO resource is the optimum beam.

Further, second RRC configuration information is sent to the terminal, in which the second RRC configuration information indicates at least one of the plurality of RO resources and/or a plurality of preamble sequences preconfigured by the candidate cell for the terminal, in which the plurality of preamble sequences correspond to the plurality of RO resources respectively, that is, different RO resources may use different preamble sequences.

In embodiments of the present disclosure, the sending period for sending the preamble sequence may be configured for the terminal. Optionally, the sending period may be configured by the base station. Optionally, the sending period may be the period of the RO resource.

It needs to be noted that the terminal may send the preamble sequences of the candidate cells to all candidate cells, and the terminal may also send the preamble sequence of the candidate cell to the candidate cell when the beam measurement result of the candidate cell meet a certain condition.

For example, in response to a beam measurement result of the optimum beam of the candidate cell>a beam measurement result of the optimum beam of the source cell+ an offset, the terminal sends the preamble sequence of the candidate cell to the candidate cell; in response to an average value of the beam measurement results of the candidate cell> an average value of beam measurement results of the source cell + an offset, the terminal sends the preamble sequence of the candidate cell to the candidate cell; in response to the average value or a maximum value of the beam measurement results of the candidate cell> a beam measurement threshold of the candidate cell, the terminal sends the preamble sequence of the candidate cell to the candidate cell; and in response to top N optimum measurement results are the measurement results of the candidate cell, the terminal sends the preamble sequence of the candidate cell to the candidate cell.

At step S502, the TA of the candidate cell with respect to the terminal is measured according to the preamble sequence.

At step S503, the TA of the candidate cell is indicated or updated to the terminal.

For a specific introduction of steps S502 to S503, reference can be made to relevant content in the embodiments of the present disclosure, which will not be repeated here. In embodiments of the present disclosure, the preamble sequence of the candidate cell periodically sent by the terminal is received, and the TA of the candidate cell is measured according to the preamble sequence. In the present disclosure, before performing inter-cell handover, TA values of respective candidate cells with respect to the user may be measured in advance, and the TA values of the respective candidate cells may be indicated or updated for the user, such that during inter-cell handover, fast accessing the target cell may be achieved and time overhead of handover may be reduced.

Please refer to FIG. 6, FIG. 6 is a flowchart of a method for measuring a TA according to an embodiment of the present disclosure. The method for measuring a TA is performed by a network device. The method for measuring a TA includes but is not limited to the following steps.

At step S601, the terminal is triggered for a random access and the preamble sequence sent by the terminal in a triggered random access process is received.

Optionally, the terminal is periodically triggered for the random access by multiplexing a PDCCH order to send the preamble sequence.

Optionally, after triggering the terminal for the random access for first time by multiplexing the PDCCH order to send the preamble sequence, the preamble sequence periodically sent by the terminal is received.

It needs to be noted that state information of the terminal may be monitored, and whether to remeasure the TA is determined according to the state information of the terminal; and in present of determining to remeasure the TA, the terminal is triggered for performing the random access to send the preamble sequence.

Optionally, after triggering the terminal for the random access for first time by multiplexing the PDCCH order to send the preamble sequence, the state information of the terminal is monitored, and whether to remeasure the TA is determined according to the state information of the terminal.

For example, position information and speed information of the terminal may be monitored to determine whether to remeasure the TA, and then the terminal may be triggered for the random access.

Further, in present of determining to remeasure the TA, the terminal is triggered for the random access again by multiplexing the PDCCH order to send the preamble sequence.

Optionally, an RRC signaling allocates a contention free random access (CFRA) resource for each candidate cell. The random access resource includes an RO resource and the preamble sequence.

At S602, the TA of the candidate cell with respect to the terminal is measured according to the preamble sequence.

At S603, the TA of the candidate cell is indicated or updated to the terminal.

For a specific introduction of S602 to S603, reference can be made to relevant content in embodiments of the present disclosure, which will not be repeated here.

In embodiments of the present disclosure, the terminal is triggered for a random access and the preamble sequence sent by the terminal in the triggered random access process is received, the TA of the candidate cell with respect to the terminal is measured according to the preamble sequence, and the TA of the candidate cell is indicated or updated to the terminal. In the present disclosure, before performing inter-cell handover, TA values of respective candidate cells with respect to the user may be measured in advance, and the TA values of the respective candidate cells may be indicated or updated for the user, such that during inter-cell handover, fast accessing the target cell may be achieved and time overhead of handover may be reduced.

Please refer to FIG. 7, FIG. 7 is a flowchart of a method for measuring a TA according to an embodiment of the present disclosure. The method for measuring a TA is performed by a terminal. The method for measuring a TA includes but is not limited to the following steps.

At step S701, target information corresponding to a candidate cell is sent to a network device, in which the target information is configured to measure a TA of the candidate cell with respect to the terminal.

It needs to be noted that the network device may be a network device of a source cell. The network device can maintain a plurality of candidate cells for the terminal. One cell can be selected from the plurality of candidate cells and determined as a target cell when it is required to perform cell handover. However, TAs of respective serving cells and respective candidate cells with respect to the user may be different. In this way, it is required to perform a random access to synchronize to the target cell when the terminal hands over to cells with different TAs. As a result, time overhead of accessing the target cell will increase accordingly. In this way, TA values of respective candidate cells with respect to the terminal may be obtained in advance, and accessing the target cell may be performed as soon as possible during handover.

Optionally, the terminal may send the preamble sequence of the candidate cell to the network device, in which the preamble sequence is configured to measure the TA of the candidate cell, that is, the target information is the preamble sequence of the candidate cell.

In embodiments of the present disclosure, the preamble sequence may be periodically sent to the network device when the target information is sent to a network device corresponding to the candidate cell. Optionally, a triggering request for a random access sent by the network device is received and the preamble sequence is sent in a triggered random access process.

Optionally, the terminal may send an SRS to the network device, in which the SRS is configured to measure the TA of the candidate cell with respect to the terminal, i.e. the target information is the SRS.

In embodiments of the present disclosure, the source cell may configure SRS information for the terminal, in which the SRS information is configured to determine a receiving time frequency position of the SRS, and the receiving time frequency position is configured to receive the SRS by the network device of the candidate cell.

At S702, information indicating or updating the TA of the candidate cell sent by the network device is received.

Optionally, an RAR sent by the network device is received, in which the RAR carries the information indicating or updating the TA of the candidate cell.

In embodiments of the present disclosure, in present of indicating or updating the TA of the candidate cell for first time, indicating or updating the TA of the candidate cell is received; or in present of indicating or updating the TA of the candidate cell for non-first time, indicating or updating an adjustment amount of the TA of the candidate cell is received.

Optionally, in present of indicating or updating the TA of the candidate cell for first time, the RAR sent by the network device of the candidate cell may be received, in which the RAR carries the information indicating or updating the TA.

For example, in present of indicating or updating the TA of the candidate cell for first time, the TA may be updated via an MAC CE, in which the MAC CE at least includes a candidate cell identifier with an indication field of 12 bits to indicate the TA value so as to indicate or update the TA of the candidate cell to the terminal via the RAR.

For example, in present of indicating or updating the TA of the candidate cell for non-first time, the network device may configure the adjustment amount of the TA of the candidate cell to the terminal via RRC configuration information.

In embodiments of the present disclosure, the target information corresponding to the candidate cell is sent to the network device, in which the target information is configured to measure the TA of the candidate cell with respect to the terminal, and the information indicating or updating the TA is received. In the present disclosure, before performing inter-cell handover, TA values of respective candidate cells with respect to the user may be measured in advance, and the TA values of the respective candidate cells may be indicated or updated for the user, such that during inter-cell handover, fast accessing the target cell may be achieved and time overhead of handover may be reduced.

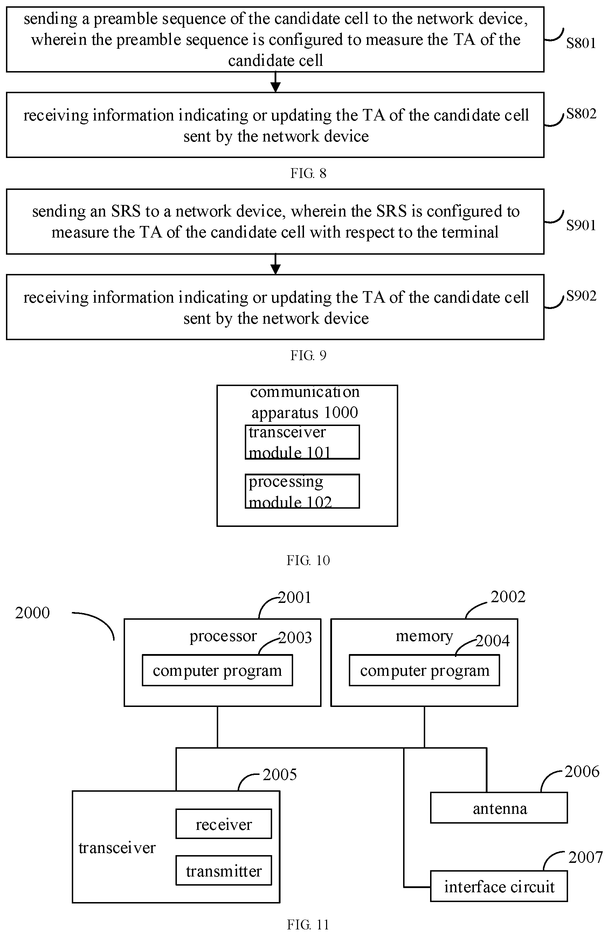

Please refer to FIG. 8, FIG. 8 is a flowchart of a method for measuring a TA according to the embodiments of the present disclosure. The method for measuring a TA is performed by a terminal. The method for measuring a TA includes but is not limited to the following steps.

At step S801, a preamble sequence of the candidate cell is sent to the network device, in which the preamble sequence is configured to measure the TA of the candidate cell.

Optionally, the network device may be a network device of a source cell.

Optionally, the preamble sequence may be periodically sent to the network device.

In embodiments of the present disclosure, a sending period for sending the preamble sequence configured by the network device may be received.

In embodiments of the present disclosure, optionally, a preamble sequence corresponding to the candidate cell is sent to the network device of each candidate cell; and optionally, a target candidate cell satisfying a preset condition may be selected from candidate cells of the terminal, a corresponding preamble sequence may be sent to the target candidate cell.

It needs to be noted that the preamble sequence is sent to a network device corresponding to the candidate cell on a preconfigured RO resource.

Optionally, the preamble sequence may be sent on an optimum beam of the candidate cell via the preconfigured RO resource.

In embodiments of the present disclosure, a beam measurement result of the candidate cell is obtained; the optimum beam of the candidate cell is determined according to the beam measurement result; and the preamble sequence is sent on the optimum beam of the candidate cell via an RO resource, in which a plurality of beams of the candidate cell all correspond to the RO resource.

Optionally, first RRC configuration information sent by the network device is received; and the beam measurement result of the candidate cell is obtained according to the first RRC configuration information, and the optimum beam is determined based on the beam measurement result.

In embodiments of the present disclosure, a plurality of candidate RO resources preconfigured by the candidate cell for the terminal are determined, in which the plurality of candidate RO resources correspond to a plurality of beams of the candidate cell respectively; a target RO resource selected by the terminal indicated by the network device is received; a beam corresponding to the target RO resource is determined based on a correspondence between the plurality of candidate RO resources and the plurality of beams of the candidate cell, the corresponding beam is determined as the target beam of the candidate cell, in which the target beam is the optimum beam; and the preamble sequence is sent on the target beam via the target RO resource.

Optionally, second RRC configuration information sent by the network device may be received, in which the second RRC configuration information indicate at least one of a plurality of candidate RO resources and/or a plurality of candidate preamble sequences preconfigured by the candidate cell for the terminal, in which the plurality of candidate preamble sequences correspond to the plurality of candidate RO resources respectively.

It needs to be noted that the preamble sequence of the candidate cell may be sent to each candidate cell, and the target candidate cell satisfying the preset condition may be selected from candidate cells of the terminal, and a corresponding preamble sequence may be sent to the target candidate cell. For a specific process that the terminal selects the target candidate cell satisfying the preset condition, reference can be made to relevant content in the above embodiments, which will not be detailed here.

Optionally, a triggering request for a random access sent by the network device is received and the preamble sequence is sent in a triggered random access process.

Optionally, a PDCCH order periodically sent by the network device is received, in which the PDCCH order is configured to trigger the terminal for the random access. Optionally, a PDCCH order sent by the network device is received and the preamble sequence is periodically sent to the network device after sending the preamble sequence once in a random access process, in which the PDCCH order is configured to trigger the terminal for the random access.

Optionally, the PDCCH order sent by the network device is received and the preamble sequence once is sent in a random access process; and in present of the network device determining to remeasure the TA, a PDCCH order sent by the network device is received again to trigger the terminal to send the preamble sequence of the candidate cell again in the random access process.

In an embodiment of the present disclosure, in present of the PDCCH order only indicating triggering the random access, an RO resource corresponding to the candidate cell is determined from candidate RO resources preconfigured by the candidate cell and the preamble sequence corresponding to the candidate cell is determined from candidate preamble sequences; and the corresponding preamble sequence is sent to the network device on the RO resource corresponding to the candidate cell.

Further, a cell identifier of a candidate cell to be performed the random access is determined from an indication field of the PDCCH order; and/or, at least one of an RO, a preamble sequence and transmitting beam information corresponding to the candidate cell to be performed the random access is determined from the indicated field of the PDCCH order.

At step S802, information indicating or updating the TA sent by the network device is received.

For a specific introduction of S802, reference can be made to relevant content in the embodiments of the present disclosure, which will not be repeated here.

In the embodiments of the present disclosure, the preamble sequence of the candidate cell is sent to the network device, in which the preamble sequence is configured to measure the TA of the candidate cell; and the information indicating or updating the TA of the candidate cell is received. In the present disclosure, before performing inter-cell handover, TA values of respective candidate cells with respect to the user may be measured in advance, and the TA values of the respective candidate cells may be indicated or updated for the user, such that during inter-cell handover, fast accessing the target cell may be achieved and time overhead of handover may be reduced.

Please refer to FIG. 9, FIG. 9 is a flowchart of a method for measuring a TA according to an embodiment of the present disclosure. The method for measuring a TA is performed by a terminal. The method for measuring a TA includes but is not limited to the following steps.

At step S901, an SRS is sent to a network device, in which the SRS is configured to measure the TA of the candidate cell with respect to the terminal.

Optionally, SRS information sent by the network device may be received, in which the SRS information may indicate a receiving time frequency position of the SRS corresponding to the candidate cell. Further, after the terminal determines the receiving time frequency position of the SRS corresponding to the candidate cell based on the SRS information, a sending time frequency position of the SRS may be determined according to the receiving time frequency position, and the SRS may be sent to the network device at the sending time frequency position.

Optionally, a sending period of the SRS and a measurement period of the TA of the candidate cell may be determined based on the SRS information. The terminal may send the SRS to the network device according to the sending period of the SRS. For a process of determining the measurement period of the TA, reference can be made to relevant content in above embodiments, which will not be repeated here.

At step S902, information indicating or updating the TA of the candidate cell sent by the network device is received.

For a specific introduction of S902, reference can be made to relevant content in the embodiments of the present disclosure, which will not be repeated here.

In embodiments of the present disclosure, the SRS is sent to the network device, in which the SRS is configured to measure the TA of the candidate cell with respect to the terminal; and the information indicating or updating the TA is received. In the present disclosure, before performing inter-cell handover, TA values of respective candidate cells with respect to the user may be measured in advance, and the TA values of the respective candidate cells may be indicated or updated for the user, such that during inter-cell handover, fast accessing the target cell may be achieved and time overhead of handover may be reduced.

In the above embodiments of the present disclosure, the methods in the embodiments of the present disclosure are introduced respectively from the perspective of the network device and the terminal. In order to realize the functions of the methods in the above embodiments of the present disclosure, the network device and the terminal may include a hardware structure, and a software module, so that the above functions are implemented in a form of the hardware structure, the software module, or the hardware structure plus the software module. Some of these functions may be implemented in the form of the hardware structure, the software module, or the hardware structure plus the software module.

The communication apparatus 1000 may be a terminal (such as the terminal in above method embodiments), an apparatus in the terminal, or a device being used in match with the terminal. Or, the communication apparatus 1000 may be a network device, an apparatus in the network device, or a device being used in match with the network device.

When the communication apparatus 1000 is a network device (such as the network device in the above method embodiments),
a processing module 102, configured to measure a TA of a candidate cell with respect to a terminal based on target information sent by the terminal; and
the processing module 102 being configured to indicate or update the TA of the candidate cell to the terminal.

Optionally, a transceiver module 101 is further configured to receive a preamble sequence of the candidate cell sent by the terminal; and measure the TA of the candidate cell with respect to the terminal according to the preamble sequence.

Optionally, the transceiver module 101 is further configured to receive an SRS of the candidate cell sent by the terminal; and measure the TA of the candidate cell with respect to the terminal according to the SRS.

Optionally, the transceiver module 101 is further configured to receive the preamble sequence of the candidate cell periodically sent by the terminal; or, trigger the terminal for a random access and receive the preamble sequence of the candidate cell sent by the terminal in a triggered random access process.

Optionally, the transceiver module 101 is further configured to receive the preamble sequence of the candidate cell sent by the terminal on an RO resource.

Optionally, the transceiver module 101 is further configured to receive the preamble sequence of the candidate cell sent by the terminal on an optimum beam of the candidate cell via the RO resource.

Optionally, the transceiver module 101 is further configured to determine one RO resource preconfigured by the candidate cell for the terminal, in which a plurality of beams of the candidate cell all correspond to the RO resource; and receive the preamble sequence sent by the terminal on a target beam corresponding to a target RO resource via the target RO resource, in which the target RO resource is one RO resource selected from the plurality of RO resources preconfigured, and the target beam is the optimum beam.

Optionally, the transceiver module 101 is further configured to determine a plurality of RO resources preconfigured by the candidate cell for the terminal, in which the plurality of RO resources correspond to a plurality of beams of the candidate cell respectively; and receive the preamble sequence sent by the terminal on a target beam corresponding to a target RO resource via the target RO resource, in which the target RO resource is one RO resource selected from the plurality of RO resources preconfigured, and the target beam is the optimum beam.

Optionally, the transceiver module 101 is further configured to send first RRC configuration information to the terminal, in which the first RRC configuration information indicates the terminal to obtain a beam measurement result of the candidate cell, and the beam measurement result is configured to determine the optimum beam.

Optionally, the transceiver module 101 is further configured to send second RRC configuration information to the terminal, in which the second RRC configuration information indicates at least one of the plurality of RO resources and/or a plurality of preamble sequences preconfigured for the terminal, in which the plurality of preamble sequences correspond to the plurality of RO resources respectively.

Optionally, the transceiver module 101 is further configured to periodically trigger the terminal for the random access by multiplexing a PDCCH order to send the preamble sequence of the candidate cell; or, after triggering the terminal for the random access for first time by multiplexing the PDCCH order to send the preamble sequence of the candidate cell, receive the preamble sequence of the candidate cell periodically sent by the terminal; or, after triggering the terminal for the random access for first time by multiplexing the PDCCH order to send the preamble sequence of the candidate cell, monitor state information of the terminal, and determine whether to remeasure the TA according to the state information of the terminal, and in present of determining to remeasure the TA, trigger the terminal for the random access again by multiplexing the PDCCH order to send the preamble sequence of the candidate cell.

Optionally, the processing module 102 is further configured to indicate a cell identifier of a candidate cell to be performed the random access to the terminal via the PDCCH order; and/or indicate at least one of an RO, a preamble sequence and transmitting beam information corresponding to the candidate cell to be performed the random access to the terminal via the PDCCH order.

Optionally, the transceiver module 101 is further configured to configure a sending period for sending the preamble sequence of the candidate cell for the terminal.

Optionally, the transceiver module 101 is further configured to configure SRS information for the terminal, in which the SRS information indicates a receiving time frequency position of the SRS corresponding to the candidate cell; and receive the SRS sent by the terminal at the receiving time frequency position.

Optionally, the transceiver module 101 is further configured to obtain a sending period of the SRS from SRS information, and receive the SRS based on the sending period of the SRS.

Optionally, the processing module 102 is further configured to indicate or update the TA of the candidate cell to the terminal via an RAR.

Optionally, the processing module 102 is further configured to in present of indicating or updating the TA of the candidate cell for first time, indicate or update the TA of the candidate cell to the terminal; and in present of indicating or updating the TA of the candidate cell for non-first time, indicate or update an adjustment amount of the TA of the candidate cell to the terminal.

Optionally, the processing module 102 is further configured to in present of indicating or updating the TA of the candidate cell for first time, indicate or update the TA of the candidate cell to the terminal via an RAR.

When the communication apparatus 1000 is a terminal,
the transceiver module 101, configured to send target information corresponding to a candidate cell to a network device, in which the target information is configured to measure a TA of the candidate cell with respect to the terminal; and
the processing module 102, configured to receive information indicating or updating the TA of the candidate cell sent by the network device.

The transceiver module 101 is further configured to send a preamble sequence of the candidate cell to the network device, in which the preamble sequence is configured to measure the TA of the candidate cell.

The transceiver module 101 is further configured to send an SRS to the network device, in which the SRS is configured to measure the TA of the candidate cell with respect to the terminal.

The transceiver module 101 is further configured to send the preamble sequence of the candidate cell to the network device periodically; or, receive a triggering request for a random access sent by the network device and send the preamble sequence of the candidate cell in a triggered random access process.

The transceiver module 101 is further configured to send the preamble sequence of the candidate cell to the network device; or, select a target candidate cell satisfying a preset condition from candidate cells of the terminal, and send a preamble sequence of the target candidate cell to the network device.

The transceiver module 101 is further configured to send the preamble sequence to the network device on a preconfigured RO resource.

The transceiver module 101 is further configured to send the preamble sequence of the candidate cell on an optimum beam of the candidate cell via the preconfigured RO resource.

The transceiver module 101 is further configured to obtain a beam measurement result of the candidate cell; determine the optimum beam of the candidate cell according to the beam measurement result; and send the preamble sequence of the candidate cell to the network device on the optimum beam of the candidate cell via an RO resource, in which a plurality of beams of the candidate cell all correspond to the RO resource.

The transceiver module 101 is further configured to determine a plurality of RO resources preconfigured by the candidate cell for the terminal, in which the plurality of RO resources correspond to a plurality of beams of the candidate cell; select one RO resource from the plurality of RO resources to be determined as a target RO resource selected by the terminal; determine a target beam corresponding to the target RO resource based on a correspondence between the plurality of RO resources and the plurality of beams of the candidate cell, in which the target beam is the optimum beam; and send the preamble sequence of the candidate cell on the target beam via the target RO resource.

The transceiver module 101 is further configured to receive first RRC configuration information sent by the network device; and obtain the beam measurement result of the candidate cell according to the first RRC configuration information, and determine the optimum beam based on the beam measurement result.

The transceiver module 101 is further configured to receive second RRC configuration information sent by the network device, in which the second RRC configuration information indicate at least one of a plurality of candidate RO resources and/or a plurality of candidate preamble sequences preconfigured by the candidate cell for the terminal, in which the plurality of candidate preamble sequences correspond to the plurality of candidate RO resources respectively.

The transceiver module 101 is further configured to receive a PDCCH order periodically sent by the network device, in which the PDCCH order is configured to trigger the terminal for the random access; or, receive a PDCCH order sent by the network device and periodically sending the preamble sequence of the candidate cell to the network device after sending the preamble sequence of the candidate cell once in a random access process; or, receive a PDCCH order sent by the network device and sending the preamble sequence of the candidate cell once in a random access process; and in present of the network device determining to remeasure the TA, receive a PDCCH order sent by the network device again to trigger the terminal to send the preamble sequence of the candidate cell again in a random access process.

The processing module 102 is further configured to determine a cell identifier of a candidate cell to be performed the random access from an indication field of the PDCCH order; and/or, determine at least one of an RO, a preamble sequence and transmitting beam information corresponding to the candidate cell to be performed the random access from the indicated field of the PDCCH order.

The processing module 102 is further configured to in present of the PDCCH order only indicating triggering the random access, determine an RO resource corresponding to the candidate cell from candidate RO resources preconfigured by the candidate cell and determine the preamble sequence corresponding to the candidate cell from candidate preamble sequences; and send the preamble sequence corresponding to the candidate cell to the network device on the RO resource corresponding to the candidate cell.

The transceiver module 101 is further configured to receive a sending period for sending the preamble sequence configured by the network device.

The transceiver module 101 is further configured to receive SRS information configured by the network device; determine a receiving time frequency position of the SRS corresponding to the candidate cell according to the SRS information; and send the SRS to the network device according to the receiving time frequency position.

The configuration information of the SRS includes a sending period of the SRS.

The transceiver module 101 is further configured to receive an RAR sent by the network device of the candidate cell, in which the RAR carries the information indicating or updating the TA.

The transceiver module 101 is further configured to in present of indicating or updating the TA of the candidate cell for first time, receive indicating or updating the TA of the candidate cell; or in present of indicating or updating the TA of the candidate cell for non-first time, receive indicating or updating an adjustment amount of the TA of the candidate cell.

The transceiver module 101 is further configured to in present of indicating or updating the TA of the candidate cell for first time, receive an RAR sent by the network device of the candidate cell, in which the RAR carries the information for indicating or updating the TA.

In embodiments of the present disclosure, the TA of the candidate cell with respect to the terminal is measured based on the target information sent by the terminal; and the TA of the candidate cell is indicated or updated to the terminal. In the present disclosure, before performing inter-cell handover, TA values of respective candidate cells with respect to the user may be measured in advance, and the TA values of the respective candidate cells may be indicated or updated for the user, such that during inter-cell handover, fast accessing the target cell may be achieved and time overhead of handover may be reduced.

Please refer to FIG. 11, FIG. 11 is a block diagram of another communication device 2000 according to an embodiment of the present disclosure. The communication device 2000 may be a network device, or a terminal (such as the first terminal in the above method embodiments), or a chip, a chip system, a processor, etc. that supports the network device to implement the method, or a chip, a chip system, a processor, etc. that supports the terminal to implement the method. The device 2000 is configured to implement the method in the above method embodiments. For details, please refer to the description in the above method embodiments.

The communication device 2000 may include one or more processors 2001. The processor 2001 may be a general-purpose processor or a special-purpose processor. For example, it may be a baseband processor or a central processing unit. The baseband processor is configured to process communication protocols and communication data, and the central processor is configured to control communication devices (such as base stations, baseband chips, terminals, terminal chips, DU or CU, etc.) to execute computer programs and process computer program data.

Optionally, the communication device 2000 may also include one or more memories 2002 on which a computer program 2004 is stored. When the computer program 2004 is executed by the memory 2002, the communication device 2000 implements the method in the above method embodiments. Optionally, the memory 2002, may also store data. The communication device 2000 and the memory 2002, may be set separately or integrated together.

Optionally, the communication device 2000 may also include a transceiver 2005 and an antenna 2006. The transceiver 2005 may be called a transceiving unit, a transceiving machine, or a transceiving circuit, etc., to achieve a transceiving function. The transceiver 2005 may include a receiver and a transmitter. The receiver may be called a receiver or a receiving circuit, etc., to achieve a receiving function; and the transmitter may be called a transmitter or a transmitting circuit, etc., to achieve a transmitting function.

Optionally, the communication device 2000 includes one or more interface circuits 2007. The interface circuit 2007 is configured to receive code instructions and transmit the code instructions to the processor 2001. When the code instructions are running on the processor 2001, the communication device 2000 is caused to implement the method in the above method embodiments.

In an implementation, the processor 2002 may include a transceiver configured to achieve the receiving and transmitting function. For example, the transceiver may be a transceiving circuit, or an interface, or an interface circuit. The transceiving circuit, the interface, or the interface circuit configured to achieve the receiving and transmitting function may be set separately or integrated together. The transceiving circuit, the interface or the interface circuit may be configured to read and write code/data, or the transceiving circuit, the interface or the interface circuit may be configured to transmit signals.

In an implementation, the processor 2002 may store a computer program 1003. When the computer program 1003 is running on the processor 1001, the communication device 1000 is caused to implement the method in the above method embodiments. The computer program 1003 may be solidified in the processor 1001. In this way, the processor 1001 may be implemented in hardware.

In an implementation, the communication device 2000 may include a circuit that may achieve the transmitting or receiving or communicating function in the above method embodiments. The processor and transceiver in the present disclosure may be implemented in an integrated circuit (IC), an analog IC, a radio frequency integrated circuit (RFIC), a mixed-signal IC, an application specific integrated circuit (ASIC), a printed circuit board (PCB), an electronic equipment, etc. The processor and transceiver may also be manufactured with various IC process technologies, such as a complementary metal oxide semiconductor (CMOS), nMetal-oxide-semiconductor (NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device in the above embodiments may be a network device or a terminal (such as the first terminal in the above method embodiments), but the scope of the communication device in the present disclosure is not limited to this, and the structure of the communication device may not be restricted by FIG. 11. The communication device may be an independent device or part of a larger device. For example, the communication device may be:
(1) an independent IC, or a chip, or a chip system or a subsystem;
(2) a collection including one or more IC, optionally, the IC collection may also include storage components for storing data and computer programs;
(3) an ASIC, such as a modem;
(4) modules embedded in other devices;
(5) a receiver, a terminal, an intelligent terminal, a cellular phone, a wireless device, a handheld phone, a mobile unit, a vehicle-mounted device, a network device, a cloud device, an artificial intelligence device, etc.;
(6) others.

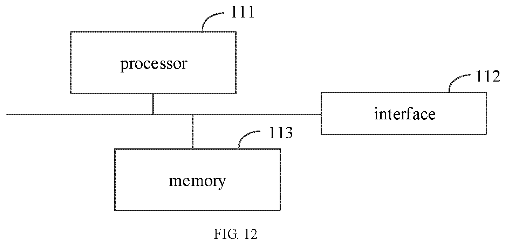

For the case where the communication device may be a chip or a chip system, please refer to FIG. 12, which is a block diagram of a chip according to the embodiments of the present disclosure. The chip 111 in FIG. 12 includes a processor 111 and an interface 112. There may be one or more processors 111, and there may be one or more interfaces 112.

Optionally, the chip further includes a memory 113 for storing necessary computer programs and data.

The chip is caused to implement functions of any one of the above method embodiments when executed.

Those skilled in the art may also understand that the various illustrative logical blocks and steps listed in the embodiments of the present disclosure may be implemented by electronic hardware, computer software, or their combination. Whether such a function is implemented in hardware or software depends on specific applications and design requirements of the overall system. Those skilled in the art may, for each specific application, use a variety of methods to achieve the above function, but such implementation shall not be regarded as going beyond the scope of the protection of the embodiments of the present disclosure.

Embodiments of the present disclosure also provide a system for measuring a TA. The system includes a communication apparatus as a terminal in the above embodiments in FIG. 10 (such as the terminal in above method embodiments) and a communication apparatus as a network device. Or, the system includes a communication device as a terminal (such as the terminal in above method embodiments) and a communication device as a network device in the above embodiments in FIG. 11.

The present disclosure also provides a computer readable storage medium for storing instructions. When the instructions are executed by a computer, functions of any one of the above method embodiments is performed.

The present disclosure also provides a computer program product. When the computer program product is executed by a computer, functions of any one of the above method embodiments is performed.

In the above embodiments, the functions may be wholly or partially implemented by software, hardware, firmware, or any combination of them. When implemented by software, the functions may be implemented in whole or in part in the form of a computer program product. The computer program product includes one or more computer programs. Procedures or functions according to embodiments of the present disclosure are wholly or partially generated when the computer program is loaded and executed on a computer. The computer may be a general purpose computer, a special purpose computer, a computer network, or other programmable device. The computer program may be stored in a computer-readable storage medium or transmitted from one computer-readable storage medium to another. For example, the computer program may be transmitted from one website, computer, server, or data center to another website, computer, server, or data center via wire (such as a coaxial cable, a fiber optic, a digital subscriber line (DSL)) or wireless (such as infrared, wireless, microwave). The computer-readable storage medium may be any available medium that may be accessed by a computer, or a data storage device such as a server that integrates one or more of the available media, and a data center. The available medium media be a magnetic medium (such as a floppy disk, a hard disk and a magnetic tape), an optical medium (such as a digital video disk (DVD)), or a semiconductor medium (such as a solid state disk (SSD)).

Those skilled in the art may understand that various numbers such as first and second involved in the present disclosure are distinguished merely for convenience of description, and are not intended to limit the scope of embodiments of the present disclosure, but also to indicate an order of precedence.

The term "at least one" in the present disclosure may also be described as one or more, and the more may be two, three, four, or more, which is not limited in the present disclosure. In the embodiment of the present disclosure, for a technical feature, the technical feature in the technical features are distinguished by terms "first", "second", "third", "A", "B", "C" and "D", etc., and the technical features described by the terms "first", "second", "third", "A", "B", "C" and "D", etc. are not in a sequential order or in an order of size.

Corresponding relationships indicated by tables in the present disclosure may be configured or predefined. Values of information in the tables are only examples, and may be configured as other values, which are not limited in the present disclosure. When the corresponding relationship between information and parameters is configured, it is not always necessary to configure all corresponding relationships indicated in tables. For example, in the tables of the present disclosure, corresponding relationships indicated by some rows may not be configured. For another example, appropriate transformations and adjustments, such as splitting and merging, may be made based on the above tables. Names of parameters shown in headers of the tables may be other names understandable by the communication device, and values or representations of the parameters may be other values or representations understandable by the communication device. When the above tables are implemented, other data structures may be used, for example, arrays, queues, containers, stacks, linear lists, pointers, linked lists, trees, graphs, structures, classes, heaps or hash tables may be used.

Predefined in the present disclosure may be understood as defined, predefined, stored, pre-stored, pre-negotiated, pre-configured, solidified or pre-fired.

Those skilled in the related art may realize that, in combination with units and algorithm steps of the examples described in embodiments of the present disclosure, may be implemented by an electronic hardware or a combination of an electronic hardware and a computer software. Whether the functions are executed by the hardware or the software depends on a specific application and a design constraint of the technical solutions. Those skilled in the art may adopt different methods for each specific application to implement the described functions, but such implementation should not be considered as going beyond the scope of the present disclosure.

Those skilled in the art may clearly understand that, a specific working process of a system, an apparatus and a unit described above may refer to a corresponding process in the above method embodiments, which will not be repeated here.

The above are only implementations of the present disclosure. However, the protection scope of the present disclosure is not limited here. Changes and substitutions that may be easily considered by those skilled in the art shall be contained within the protection scope of the present disclosure. Therefore, the protection scope of the present disclosure shall be subject to the protection scope of claims.

## Claims

1. A method for measuring a timing advance (TA), performed by a network device, comprising:
measuring a TA of a candidate cell with respect to a terminal based on target information sent by the terminal; and
indicating or updating the TA of the candidate cell to the terminal.

2. The method of claim 1, wherein measuring the TA of the candidate cell with respect to the terminal based on the target information sent by the terminal comprises:
receiving a preamble sequence of the candidate cell sent by the terminal; and
measuring the TA of the candidate cell with respect to the terminal according to the preamble sequence.

3. The method of claim 1, wherein measuring the TA of the candidate cell with respect to the terminal based on the target information sent by the terminal comprises:
receiving a sounding reference signal (SRS) of the candidate cell sent by the terminal; and
measuring the TA of the candidate cell with respect to the terminal according to the SRS.

4. The method of claim 2, wherein receiving the preamble sequence of the candidate cell sent by the terminal comprises:
receiving the preamble sequence of the candidate cell periodically sent by the terminal; or,
triggering the terminal for a random access and receiving the preamble sequence of the candidate cell sent by the terminal in a triggered random access process.

5. The method of claims 2 or 4, further comprising:
receiving the preamble sequence of the candidate cell sent by the terminal on a random access channel (RACH) occasion (RO) resource.

6. The method of claim 5, further comprising:
receiving the preamble sequence of the candidate cell sent by the terminal on an optimum beam of the candidate cell via the RO resource.

7. The method of claim 6, wherein receiving the preamble sequence of the candidate cell sent by the terminal on the optimum beam of the candidate cell via the RO resource comprises:
determining one RO resource preconfigured by the candidate cell for the terminal, wherein a plurality of beams of the candidate cell all correspond to the RO resource; and
receiving the preamble sequence of the candidate cell sent by the terminal on the optimum beam via the RO resource, wherein the optimum beam is determined based on a beam measurement result of the candidate cell.

8. The method of claim 6, wherein receiving the preamble sequence of the candidate cell sent by the terminal on the optimum beam of the candidate cell via the RO resource comprises:
determining a plurality of RO resources preconfigured by the candidate cell for the terminal, wherein the plurality of RO resources correspond to a plurality of beams of the candidate cell respectively; and
receiving the preamble sequence of the candidate cell sent by the terminal on a target beam corresponding to a target RO resource via the target RO resource, wherein the target RO resource is one RO resource selected from the plurality of RO resources preconfigured, and the target beam is the optimum beam.

9. The method of claim 7, further comprising:
sending first radio resource control (RRC) configuration information to the terminal, wherein the first RRC configuration information indicates the terminal to obtain the beam measurement result of the candidate cell, and the beam measurement result is configured to determine the optimum beam.

10. The method of claim 8, further comprising:
sending second RRC configuration information to the terminal, wherein the second RRC configuration information indicates at least one of the plurality of RO resources and/or a plurality of preamble sequences preconfigured for the terminal, wherein the plurality of preamble sequences correspond to the plurality of RO resources respectively.

11. The method of claim 4, further comprising:
periodically triggering the terminal for the random access by multiplexing a physical downlink control channel (PDCCH) order to send the preamble sequence of the candidate cell; or,
after triggering the terminal for the random access for first time by multiplexing the PDCCH order to send the preamble sequence of the candidate cell, receiving the preamble sequence of the candidate cell periodically sent by the terminal; or,
after triggering the terminal for the random access for first time by multiplexing the PDCCH order to send the preamble sequence of the candidate cell, monitoring state information of the terminal, and determining whether to remeasure the TA according to the state information of the terminal; and
in present of determining to remeasure the TA, triggering the terminal for the random access again by multiplexing the PDCCH order to send the preamble sequence of the candidate cell.

12. The method of claim 11, further comprising:
indicating a cell identifier of a candidate cell to be performed the random access to the terminal via the PDCCH order; and/or
indicating at least one of an RO, a preamble sequence and transmitting beam information corresponding to the candidate cell to be performed the random access to the terminal via the PDCCH order.

13. The method of claim 2, further comprising:
configuring a sending period for sending the preamble sequence of the candidate cell for the terminal.

14. The method of claim 3, wherein receiving the SRS of the candidate cell sent by the terminal comprises:
configuring SRS information for the terminal, wherein the SRS information indicates a receiving time frequency position of the SRS corresponding to the candidate cell; and
receiving the SRS sent by the terminal at the receiving time frequency position.

15. The method of claims 3 or 14, further comprising:
obtaining a sending period of the SRS from SRS information, and receiving the SRS based on the sending period of the SRS.

16. The method of claim 1, wherein indicating or updating the TA of the candidate cell to the terminal comprises:
indicating or updating the TA of the candidate cell to the terminal via a random access response (RAR).

17. The method of claim 1, further comprising:
in present of indicating or updating the TA of the candidate cell for first time, indicating or updating the TA of the candidate cell to the terminal; and
in present of indicating or updating the TA of the candidate cell for non-first time, indicating or updating an adjustment amount of the TA of the candidate cell to the terminal.

18. The method of claim 1, wherein indicating or updating the TA of the candidate cell to the terminal comprises:
in present of indicating or updating the TA of the candidate cell for first time, indicating or updating the TA of the candidate cell to the terminal via an RAR.

19. A method for measuring a timing advance (TA), performed by a terminal, comprising:
sending target information corresponding to a candidate cell to a network device, wherein the target information is configured to measure a TA of the candidate cell with respect to the terminal; and
receiving information indicating or updating the TA of the candidate cell sent by the network device.

20. The method of claim 19, wherein sending the target information corresponding to the candidate cell to the network device comprises:
sending a preamble sequence of the candidate cell to the network device, wherein the preamble sequence is configured to measure the TA of the candidate cell.

21. The method of claim 19, wherein sending the target information corresponding to the candidate cell to the network device comprises:
sending a sounding reference signal (SRS) to the network device, wherein the SRS is configured to measure the TA of the candidate cell with respect to the terminal.

22. The method of claim 20, wherein sending the preamble sequence of the candidate cell to the network device comprises:
sending the preamble sequence of the candidate cell to the network device periodically; or,
receiving a triggering request for a random access sent by the network device and sending the preamble sequence of the candidate cell in a triggered random access process.

23. The method of claim 22, wherein sending the preamble sequence of the candidate cell to the network device periodically comprises:
sending the preamble sequence of the candidate cell to the network device; or,
selecting a target candidate cell satisfying a preset condition from candidate cells of the terminal, and sending a preamble sequence of the target candidate cell to the network device.

24. The method of claim 20 or 22 or 23, further comprising:
sending the preamble sequence of the candidate cell to the network device on a preconfigured random access channel (RACH) occasion (RO) resource.

25. The method of claim 24, wherein sending the preamble sequence of the candidate cell to the network device on the preconfigured RO resource comprises:
sending the preamble sequence of the candidate cell on an optimum beam of the candidate cell via the preconfigured RO resource.

26. The method of claim 25, wherein sending the preamble sequence of the candidate cell on the optimum beam of the candidate cell via the preconfigured RO resource comprises:
obtaining a beam measurement result of the candidate cell;
determining the optimum beam of the candidate cell according to the beam measurement result; and
sending the preamble sequence of the candidate cell to the network device on the optimum beam of the candidate cell via an RO resource, wherein a plurality of beams of the candidate cell all correspond to the RO resource.

27. The method of claim 25, wherein sending the preamble sequence of the candidate cell on the optimum beam of the candidate cell via the preconfigured RO resource comprises:
determining a plurality of RO resources preconfigured by the candidate cell for the terminal, wherein the plurality of RO resources correspond to a plurality of beams of the candidate cell;
selecting one RO resource from the plurality of RO resources to be determined as a target RO resource selected by the terminal;
determining a target beam corresponding to the target RO resource based on a correspondence between the plurality of RO resources and the plurality of beams of the candidate cell, wherein the target beam is the optimum beam; and
sending the preamble sequence of the candidate cell on the target beam via the target RO resource.

28. The method of claim 26, further comprising:
receiving first radio resource control (RRC) configuration information sent by the network device; and
obtaining the beam measurement result of the candidate cell according to the first RRC configuration information, and determining the optimum beam based on the beam measurement result.

29. The method of claim 27, further comprising:
receiving second RRC configuration information sent by the network device, wherein the second RRC configuration information indicate at least one of a plurality of candidate RO resources and/or a plurality of candidate preamble sequences preconfigured by the candidate cell for the terminal, wherein the plurality of candidate preamble sequences correspond to the plurality of candidate RO resources respectively.

30. The method of claim 22, further comprising:
receiving a physical downlink control channel (PDCCH) order periodically sent by the network device, wherein the PDCCH order is configured to trigger the terminal for the random access; or,
receiving a PDCCH order sent by the network device and periodically sending the preamble sequence of the candidate cell to the network device after sending the preamble sequence of the candidate cell once in a random access process; or,
receiving a PDCCH order sent by the network device and sending the preamble sequence of the candidate cell once in a random access process; and
in present of the network device determining to remeasure the TA, receiving a PDCCH order sent by the network device again to trigger the terminal to send the preamble sequence of the candidate cell again in a random access process.

31. The method of claim 30, further comprising:
determining a cell identifier of a candidate cell to be performed the random access from an indication field of the PDCCH order; and/or,
determining at least one of an RO, a preamble sequence and transmitting beam information corresponding to the candidate cell to be performed the random access from the indicated field of the PDCCH order.

32. The method of claim 30, further comprising:
in present of the PDCCH order only indicating triggering the random access, determining an RO resource corresponding to the candidate cell from candidate RO resources preconfigured by the candidate cell and determining the preamble sequence corresponding to the candidate cell from candidate preamble sequences; and
sending the preamble sequence corresponding to the candidate cell to the network device on the RO resource corresponding to the candidate cell.

33. The method of claim 20, further comprising:
receiving a sending period for sending the preamble sequence of the candidate cell configured by the network device.

34. The method of claim 21, wherein sending the SRS to the network device comprises:
receiving SRS information configured by the network device;
determining a receiving time frequency position of the SRS corresponding to the candidate cell according to the SRS information; and
sending the SRS to the network device according to the receiving time frequency position.

35. The method of claim 34, wherein the SRS information comprises a sending period of the SRS.

36. The method of claim 19, wherein receiving the information indicating or updating the TA of the candidate cell comprises:
receiving a random access response (RAR) sent by the network device of the candidate cell, wherein the RAR carries the information indicating or updating the TA.

37. The method of claim 36, further comprising:
in present of indicating or updating the TA of the candidate cell for first time, receiving indicating or updating the TA of the candidate cell; or
in present of indicating or updating the TA of the candidate cell for non-first time, receiving indicating or updating an adjustment amount of the TA of the candidate cell.

38. The method of claim 19, wherein receiving the information indicating or updating the TA of the candidate cell comprises:
in present of indicating or updating the TA of the candidate cell for first time, receiving an RAR sent by the network device of the candidate cell, wherein the RAR carries the information for indicating or updating the TA.

39. A communication apparatus, comprising:
a processing module, configured to measure a timing advance (TA) of a candidate cell with respect to a terminal based on target information sent by the terminal; and indicate or update the TA of the candidate cell to the terminal.

40. A communication apparatus, comprising:
a transceiver module, configured to send target information corresponding to a candidate cell to a network device, wherein the target information is configured to measure a TA of the candidate cell with respect to the terminal; and receive information indicating or updating the TA of the candidate cell sent by the network device.

41. A communication device, comprising: a processor and a memory for storing a computer program, wherein when the computer program stored in the memory is executed by the processor, the communication device is caused to implement the method of any one of claims 1 to 18.

42. A communication device, comprising: a processor and a memory for storing a computer program, wherein when the computer program stored in the memory is executed by the processor, the communication device is caused to implement the method of any one of claims 19 to 38.

43. A communication device, comprising: a processor and an interface circuit; wherein
the interface circuit is configured to receive code instructions and transmit the code instructions to the processor; and
the processor is configured to run the code instructions to implement the method of any one of claims 1 to 18.

44. A communication device, comprising: a processor and an interface circuit; wherein
the interface circuit is configured to receive code instructions and transmit the code instructions to the processor; and
the processor is configured to run the code instructions to implement the method of any one of claims 19 to 38.

45. A computer readable storage medium for storing instructions, wherein when the instructions are executed, the method of any one of claims 1 to 18 is implemented.

46. A computer readable storage medium for storing instructions, wherein when the instructions are executed, the method of any one of claims 19 to 38 is implemented.
